**Europäisches Patentamt**

**European Patent Office**

**Office européen des brevets**

(19)

(11) Veröffentlichungsnummer: **0 096 331**
**B1**

(12) **EUROPÄISCHE PATENTSCHRIFT**

(45) Veröffentlichungstag der Patentschrift:
**29.01.86**

(51) Int. Cl.⁴: **C 03 B 37/16**

(21) Anmeldenummer: **83105339.2**

(22) Anmeldetag: **30.05.83**

(54) **Vorrichtung zum Trennen von Glasfasern.**

(30) Priorität: **03.06.82 DE 3221010**

(43) Veröffentlichungstag der Anmeldung:
**21.12.83 Patentblatt 83/51**

(45) Bekanntmachung des Hinweises auf die Patenterteilung:
**29.01.86 Patentblatt 86/5**

(84) Benannte Vertragsstaaten:
**AT BE CH DE FR GB IT LI LU NL SE**

(56) Entgegenhaltungen:
**FR - A - 2 369 222**
**US - A - 4 017 013**

(73) Patentinhaber: **Siemens Aktiengesellschaft, Berlin und München Wittelsbacherplatz 2, D-8000 München 2 (DE)**

(72) Erfinder: **Krause, Dieter, Ravensburger Ring 65, D-8000 München 60 (DE)**

ACTORUM AG

## Beschreibung

Die Erfindung bezieht sich auf eine Vorrichtung zum Trennen von Glasfasern, wobei die Glasfasern zumindest an der zu trennenden Stelle parallel über einen Amboss geführt und durch eine senkrecht zu den Glasfasern wirkende Spannvorrichtung axial vorgespannt und anschliessend auf dem Amboss in zu den Glasfasern senkrecht verlaufender Richtung mit Hilfe eines Ritzmeissels geritzt werden.

Eine typische Vorrichtung der eingangs beschriebenen Art ist durch die DE-PS Nr. 2925070 bekanntgeworden. Bei dieser und den anderen bekannten Vorrichtungen dieser Art weisen die Endflächen der getrennten Glasfasern meist nicht die für eine Weiterverarbeitung erforderliche Genauigkeit auf, so dass eine nachträgliche Bearbeitung an den Endflächen unumgänglich notwendig ist. Es hat sich gezeigt, dass nur etwa 30% der ritzgetrennten Glasfasern eine brauchbare Bruchfläche aufweisen, d.h. dass die Winkelabweichung der Druckfläche weniger als 1° zur Faserachse beträgt und deren Qualität frei von störenden Kerben, Rissen und sonstigen Unebenheiten ist.

Der Erfindung liegt die Aufgabe zugrunde, eine Vorrichtung der eingangs beschriebenen Art derart weiterzubilden, dass die Qualität der Glasfaserendflächen ganz wesentlich erhöht wird. Diese Aufgabe wird gemäss der Erfindung dadurch gelöst, dass in dem Amboss zumindest an der Auflagefläche jeder Glasfaser ein Schlitz vorgesehen ist, der symmetrisch zur Ritzebene des Ritzmeissels verläuft. Vorzugsweise wird die Breite des Schlitzes im Amboss so gross gewählt, dass beim Ritzvorgang an der Ritzstelle annähernd eine symmetrische Spannungsverteilung im Glasfaserquerschnitt erreicht wird. Es hat sich gezeigt, dass auf diese Weise der Anteil der brauchbaren Bruchflächen auf über 60% gesteigert werden kann.

Anhand der Zeichnung, in der ein Ausführungsbeispiel im Prinzip dargestellt ist, wird die Erfindung näher erläutert. Es zeigen:

Fig. 1 eine Vorrichtung im Prinzip, und

Fig. 2 im vergrösserten Massstab einen Teil II des Ambosses, der in Fig. 1 durch einen strichpunktierten Kreis angedeutet ist.

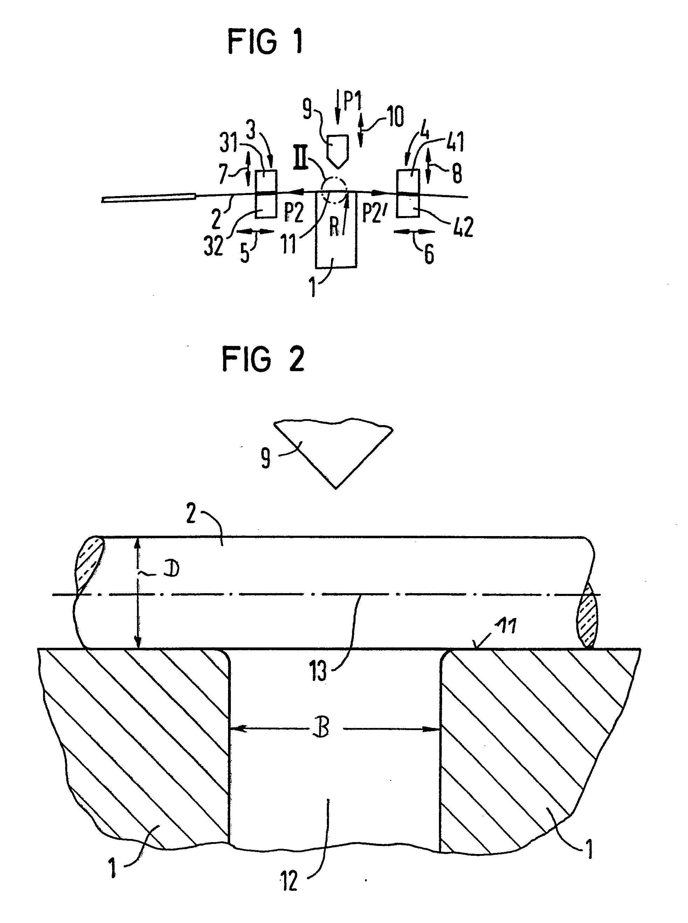

In Fig. 1 ist mit 1 ein Amboss mit Radius R bezeichnet, über den eine Glasfaser 2 axial vorgespannt wird. Mit P2 und P2' sind die auf die Glasfaser 2 ausgeübten Zugkräfte bezeichnet, die einander entgegenwirken. Die Zugkräfte P2 und P2' werden beispielsweise durch zu beiden Seiten des Ambosses 1 angeordnete Spannvorrichtungen 3 und 4, die in Pfeilrichtung 5 und 6 bewegbar sind, beispielsweise durch Schwenken, aufgebracht, wie dies in der DE-PS Nr. 2925070 dargestellt und beschrieben ist. Jede der beiden Spannvorrichtungen 3 und 4 weist Spannbacken 31 und 32 bzw. 41 und 42 auf, die in Pfeilrichtung 7 bzw. 8 zu- und gegeneinander bewegbar sind. Vorzugsweise weist der Amboss 1 eine gekrümmte Auflagefläche 11 auf, damit die Glasfaser 2 nicht nur gut auf dem Amboss 1 aufliegt, sondern durch die Kanten des Ambosses 1 auch nicht geknickt wird, wenn die Spannvorrichtungen 3 und 4 zur Erzielung einer bestimmten Spannkraft bewegt werden. Steht die Glasfaser 2 unter der vorgegebenen Zugspannung, so wird ein Ritzmeissel 9 in Pfeilrichtung 10 auf die Glasfaser 2 abgesenkt und durch Bewegen des Ritzmeissels in die Zeichenebene hinein geritzt, wodurch der Trennvorgang ausgelöst wird. Wie zuvor bereits ausgeführt worden ist, werden trotz Einhalten der beim Trennvorgang erforderlichen Vorschriften bezüglich der Zugkräfte P2 und P2' in der Faser und der Druckkraft P1 des Ritzmeissels 9 Endflächen entstehen, die entweder Winkelabweichungen zur Faserachse aufweisen oder die nicht frei von störenden Kerben, Rissen und sonstigen Unebenheiten sind.

Es wurde nun gefunden, dass, wenn man in den Amboss 1 einen entsprechend breiten Schlitz 12 einbringt, wie dies in Fig. 2 im vergrösserten Masse dargestellt ist, dann eine ganz erhebliche Verbesserung der Bruchflächenqualität erzielt wird, weil dann beim Ritzvorgang an der Ritzstelle annähernd eine symmetrische Spannungsverteilung im Glasfaserquerschnitt erreicht wird. Mit 13 ist die Faserachse bezeichnet.

Es wurde ferner herausgefunden, dass die Breite B des Schlitzes 12 im Amboss 1 in Abhängigkeit von dem Durchmesser D einer zu trennenden Glasfaser 2 bemessen werden kann. So wird eine erhebliche Verbesserung der Bruchflächenqualität dann erzielt, wenn für das Grössenverhältnis D/B des Durchmessers D einer zu trennenden Glasfaser 2 zu der Breite B des Schlitzes 12 Werte zwischen D/B = 0,125 und D/B = 0,25 eingehalten werden. Schliesslich wird beim Ritzvorgang an der Ritzstelle eine weitgehend symmetrische Spannungsverteilung im Glasfaserquerschnitt und damit eine optimale Bruchflächenqualität dann erreicht, wenn das Grössenverhältnis D/B zwischen D/B = 0,15 und D/B = 0,16 festgelegt wird.

## Patentansprüche

1. Vorrichtung zum Trennen von Glasfasern, wobei die Glasfasern (2) zumindest an der zu trennenden Stelle parallel über einen Amboss (1) geführt und durch eine senkrecht zu den Glasfasern (2) wirkende Spannvorrichtung (3, 4) axial vorgespannt und anschliessend auf dem Amboss (1) in zu den Glasfasern (2) senkrecht verlaufender Richtung mit Hilfe eines Ritzmeissels (9) geritzt werden, dadurch gekennzeichnet, dass in dem Amboss (1) zumindest an der Auflagefläche (11) jeder Glasfaser (2) ein Schlitz (12) vorgesehen ist, der symmetrisch zur Ritzebene des Ritzmeissels (9) verläuft.

2. Vorrichtung nach Anspruch 1, dadurch gekennzeichnet, dass die Breite des Schlitzes (12) im Amboss (1) so gross gewählt wird, dass beim Ritzvorgang an der Anritzstelle annähernd eine symmetrische Spannungsverteilung im Glasfaserquerschnitt erreicht wird.

3. Vorrichtung nach Anspruch 2, dadurch gekennzeichnet, dass das Grössenverhältnis (D/B) des Durchmessers (D) einer zu trennenden Glasfaser (2) zu der Breite (B) des Schlitzes (12) im Amboss (1) mindestens 0,125 und höchstens 0,25 beträgt.

4. Vorrichtung nach Anspruch 2 oder 3, dadurch gekennzeichnet, dass das Grössenverhältnis (D/B) des Durchmessers (D) einer zu trennenden Glasfaser (2) zu der Breite (B) des Schlitzes (12) im Amboss (1) zwischen 0,15 und 0,16 festgelegt ist.

## Claims

1. Apparatus for severing glass fibres, in which the glass fibres (2) are guided in parallel across an anvil (1) at least at the separation point, and are axially prestressed by a tensioning device (3, 4) which acts at right angles to the glass fibres (2), and are subsequently cut on the anvil (1) in the direction running at right angles to the glass fibres (2) with the aid of a cutting chisel (9), characterised in that a slit (12), which runs symmetrically to the cutting plane of the cutting chisel (9), is arranged in the anvil (1), at least at the surface of contact (11) of each glass fibre (2).

2. Apparatus as claimed in Claim 1, characterised in that the width of the slit (12) in the anvil (1) is selected to be of such a size that an approximately symmetrical stress distribution in the glass fibre cross-section at the scratching point is achieved during the scratching step.

3. Apparatus as claimed in Claim 2, characterised in that the relative size (D/B) of the diameter (D) of a glass fibre (2) to be severed, in relation to the width (B) of the slit (12) in the anvil (1) is at least 0.125 and at most 0.25.

4. Apparatus as claimed in Claim 2 or Claim 3, characterised in that the relative size (D/B) of the diameter (D) of a glass fibre (2) to be severed, in relation to the width (B) of the slit (12) in the anvil (1), is set at between 0.15 and 0.16.

## Revendications

1. Dispositif pour couper des fibres de verre, du type dans lequel les fibres de verre (2) sont guidées, au moins à l'emplacement auquel la coupe doit être opérée, parallèlement sur une enclume (1) et sont bloquées axialement par un dispositif de serrage (3, 4) agissant perpendiculairement aux fibres de verre (2), et sont ensuite entaillées sur l'enclume (1), à l'aide d'un ciseau à inciser (9), et suivant une direction qui s'étend perpendiculairement aux fibres de verre, caractérisé par le fait qu'il est prévu dans l'enclume (1), au moins dans la surface d'appui (11) de chaque fibre de verre, une fente (12) qui s'étend symétriquement par rapport au plan d'incision du ciseau à inciser (9).

2. Dispositif selon la revendication 1, caractérisé par le fait que la largeur de la fente (12) dans l'enclume est choisie à une valeur telle que lors de l'opération d'incision on obtient, à l'emplacement auquel on attaque l'incision, à peu près une répartition symétrique des tensions dans la section transversale de la fibre de verre.

3. Dispositif selon la revendication 2, caractérisé par le fait que le rapport des grandeurs (D/B) entre le diamètre (D) d'une fibre de verre à couper (2) et la largeur de la fente (12) ménagée dans l'enclume (1) est égal au moins à 0,125 et au plus à 0,25.

4. Dispositif selon la revendication 2 ou 3, caractérisé par le fait que le rapport des grandeurs (D/B) entre le diamètre (D) d'une fibre de verre à couper (2) et la largeur (B) de la fente (12) dans l'enclume (1), est fixé de façon à se situer entre 0,15 et 0,16.

# FIG 1

# FIG 2